# EUROPÄISCHE PATENTANMELDUNG

(11) **EP 2 851 410 A1**
(43) Veröffentlichungstag der Anmeldung: **25.03.2015**
(21) Anmeldenummer: 14184753.3
(22) Anmeldetag: 15.09.2014
(51) Int. Cl.: C10J 3/00, C10J 3/10

(54) **Biomassevergasungsanlage**

(30) Priorität: 13.09.2013 DE 102013015127
(71) Anmelder: Swierkowski, Michael, 74193 Schwaigern (DE)
(72) Erfinder: Swierkowski, Michael, 74193 Schwaigern (DE)
(74) Vertreter: Thienemann, Henning

(57) **Zusammenfassung**

Die vorliegende Erfindung betrifft die Erzeugung von brennbarem Gas aus Biomasse durch Vergasung, und betrifft insbesondere eine Biomassevergasungsanlage (1) und ein Verfahren zur Erzeugung von Gas in einer Biomassevergasungsanlage (1) sowie ein Verbundsystem zur Erzeugung von Strom. Um die Erzeugung von brennbarem Gas zu verbessern, ist eine Biomassevergasungsanlage (1) vorgesehen, die eine Transportvorrichtung (2a, 2b) von Biomasse, z.B. Holzhackschnitzel (selten auch andere Biomasse) aufweist, sowie eine Wärmezufuhrvorrichtung zur Erwärmung der im Innenbereich der Transportvorrichtung (2a, 2b) angeordneten Biomasse, und eine Abführvorrichtung (13)zum Abführen des entstehenden Gases, wobei die Absaugvorrichtung (13)unterhalb der Transportvorrichtung vorgesehen ist.

## Beschreibung

Die vorliegende Erfindung betrifft die Erzeugung von gereinigtem brennbarem Gas mit hohem Brennwert aus Biomasse durch Vergasung, und betrifft insbesondere eine Biomassevergasungsanlage und ein Verfahren zur Erzeugung von Gas in einer Biomassevergasungsanlage.

Biomassevergaser werden verwendet, um aus Biomasse brennbares Gas zu gewinnen, beispielsweise zur Einspeisung in ein Gasnetz, zur Speicherung in einem Gasspeicher, zum Antrieb eines Gasmotors, der z.B. als Antrieb für ein Fahrzeug oder als Antrieb zur Erzeugung elektrischer Energie Verwendung findet. Bei Biomassevergasern werden Holzhackschnitzel (seltener auch andere Biomasse) z.B. von oben in einen Schacht eingebracht und durch Zufuhr von Wärmeenergie vergast. Es entsteht eine Schüttung, die langsam senkrecht nach unten rutscht, weil das Holz vergast und dabei in Asche, Kohle und Gas zerfällt. Wenn Holz mit schlechter Qualität zugeführt wird und bei zu viel Feinstoffen wie Sägespänen kann es jedoch zu einer Fehlfunktion oder gar einem Ausfall der Anlage kommen. Oben wird das Holz vorgewärmt. In der Mitte der Schüttung ist der Brennraum. Hier wird Umgebungsluft zugeführt. Dabei verbrennt ein Teil des Holzes bei ca. 1000°C. Es entsteht ein Gemisch aus Holzgas und Rauchgasen die viel Stickstoff und Kohlendioxid enthalten. Das Kohlendioxid ist unerwünscht und deshalb wird das entstehende Gas unten (nicht oben) abgesaugt. Das Gas muss dabei an den glühenden unvergasten Reststoffen (Hauptbestandteil Holzkohle) vorbei und ein Teil des unbrennbaren C02 wird dabei zu brennbarem CO reduziert. Dadurch wird die schlechte Qualität des so entstandenen Holzgases etwas verbessert. Der hohe Gehalt an störendem, unbrennbarem Stickstoff kann so aber nicht entfernt werden.

Es besteht daher ein Bedarf für die Verbesserung einer Biomassevergasungsanlage.

Diese Aufgabe wird durch eine Biomassevergasungsanlage, ein Verfahren zur Erzeugung, Nachbehandlung und Reinigung von Gas in einer Biomassevergasungsanlage sowie ein Verbundsystem zur Erzeugung von Strom mit einer Biomassevergasungsanlage nach einem der unabhängigen Ansprüche erreicht. Beispielhafte Ausführungsformen sind in den abhängigen Ansprüchen dargestellt.

Gemäß der vorliegenden Erfindung wird eine Biomassevergasungsanlage vorgeschlagen, welche über
eine Transportvorrichtung von Biomasse und eine Wärmezufuhrvorrichtung zur Erwärmung der im Innenbereich der Transportvorrichtung transportierten Biomasse verfügt, wobei die Transportvorrichtung von Biomasse luftdicht von der Wärmezufuhrvorrichtung getrennt im Inneren der Wärmezufuhrvorrichtung angeordnet ist und selbst als Wärmeübertrager ausgebildet ist, wobei die im Inneren der Wärmezufuhrvorrichtung angeordnete Transportvorrichtung eine vergasungsleistungsspezifische Wärmeübertrager-Oberfläche zur Erzeugung von Gas aus Biomasse von wenigstens 0,04 m²/ (Nm³ pro h)und bevorzugt wenigstens 0,08 m²/ (Nm³ pro h) besitzt.

Vorzugsweise ist je eine Absaugvorrichtung vorgesehen, welche das entstehende Gas und Rauchgas getrennt voneinander abführt und im Inneren der Transportvorrichtung für Biomasse und im Inneren der Wärmezufuhrvorrichtung jeweils ein Unterdruck erzeugt. Die Rauchgase werden getrennt über einen normalen Schornstein in die Umgebung abgeleitet.

Vorzugsweise ist die Biomassevergasungsanlage so ausgestaltet, dass das Gas durch die glühenden, unvergasten Reststoffe führbar ist, um einen Teil des unbrennbaren CO2 zu brennbarem CO zu reduzieren.

Zusätzlich werden dabei in dem Rohgas noch vorhandene Bestandteile wie Schwefel und Teer zerstört. Dadurch wird die bereits gute Qualität des so entstandenen Holzgases noch verbessert. Das ist auch sehr vorteilhaft, wenn das Gas zur Verwendung in einem Gasmotor vorgesehen ist, da diese Bestandteile einem Gasmotor oder Gasbrenner schaden können.

Gemäß einer bevorzugten Ausführungsform kommt der Teil der Transportvorrichtung, in welchem die Vergasung stattfindet, ohne zusätzliche Verbrennungsluft aus.

Vorzugsweise ist die Biomassevergasungsanlage so ausgebildet, dass die Vergasung in offenen Transportvorrichtungen erfolgt; und/oder die Vergasung in temperaturbeständigen Transportvorrichtungen erfolgt, die liegend oder stehend aufgestellt sind.

In einem Beispiel ist vorgesehen, dass die Transportvorrichtungen von außen beheizt werden. Durch die Transportvorrichtungen wird gleichzeitig bevorzugt kontinuierlich (auch chargenweiser Transport möglich) die Biomasse transportiert und dabei vergast. Die Wärmeübertragung erfolgt durch die Wand der Transportvorrichtung von der sie umschließenden Wärmezufuhrvorrichtung aus.

Vorzugsweise ist die Transportvorrichtung als wenigstens ein Querförderer, z.B. eine Schneckenfördereinrichtung ausgelegt, welcher so ausgebildet und angeordnet ist, dass eine Erwärmung und Vergasung nicht nur punktuell sondern entlang nahezu der gesamten Oberfläche der Transportvorrichtung, die innerhalb der Wärmezufuhrvorrichtung angeordnet ist. Bevorzugt ist dies eine Strecke von mindestens 2 Metern, noch mehr bevorzugt aber die gesamte Oberfläche der Transportvorrichtung, wobei die Transportvorrichtung selbst als Wärmeübertrager ausgelegt ist.

Bei Biomassevergasungsanlagen, welche zur Erzeugung von Holzgas ausgelegt sind, mit dem ein Gasmotor z. B. mit einem 100KW Generator betrieben werden soll und in welchen im Regelbetriebsfall ein Biomassenstrom von 40 bis 100 kg/h zur Vergasung zugeführt werden soll besitzt die als Wärmeübertrager ausgelegte Transportvorrichtung vorzugsweise eine biomassenstromspezifische Oberfläche (außen) von mehr als 0,05 m²/ (Kg pro h).

Im Gegensatz zu Anlagen mit lokal stark begrenzten Vergasungs-Spots hat sich überraschender Weise gezeigt, dass hierdurch der Gesamtwirkungsgrad einer Biomassevergasungsanlage gesteigert werden kann.

Abgesehen vom Anfahren des Prozesses hat sich gezeigt, dass die zur Vergasung notwendige Wärmezufuhr zum Vergasen der Biomasse der Transportvorrichtung alleine durch die Verbrennung der nicht vergasten Bestandteile ausreichend ist. Dazu werden die nicht vergasten Bestandteile der Biomasse (Hauptbestandteil ist Holzkohle)aus der Transportvorrichtung in die Brennkammer überführt.

Die Biomasse kann in die Transportvorrichtung kontinuierlich oder auch chargenweise eingebracht werden.

Dabei wird die Verbrennungswärme auf die Transportvorrichtung übertragen, was die Vergasung im Innern der der Transportvorrichtung auslöst.

Es hat sich herausgestellt, dass die als Wärmeübertrager ausgebildete Transportvorrichtung besonders lange hält, wenn eine Erwärmung entlang möglichst der gesamten Länge der Transportvorrichtung innerhalb der Wärmezufuhrvorrichtung erfolgt. Bevorzugt ist ein Großteil der Länge der Transportvorrichtung, welche bevorzugt als Schnecke ausgelegt ist, in der Wärmezufuhrvorrichtung angeordnet, wobei die Temperatur der Transportvorrichtung zwischen 700 und 900, weiter bevorzugt zwischen 750 und 850 und noch weiter bevorzugt bei genau 800 Grad Celsius gehalten wird.

Gemäß einer weiteren, besonders bevorzugten Ausführungsform sind zwei Querförderer, vorzugsweise zwei Schnecken vorgesehen, wobei der erste, obere Querförderer dazu ausgelegt ist, eine Vorwärmung der Biomasse durchzuführen und der zweite, untere Querförderer dazu ausgelegt ist, eine Vergasung der Biomasse durchzuführen. Eine Vorwärmung erfolgt bei vorzugsweise 100 bis 500 Grad Celsius.

Vor der Schnecke ist in einem Beispiel eine Dosiereinrichtung installiert. In einem anderen Beispiel ist die Dosiereinrichtung nicht vorgesehen.

Es entsteht im Betrieb der Schnecke eine lose Schüttung, die nur einen Teil des Innenraumes der Schnecken ausfüllt und ständig umgewälzt wird. Dadurch kann die Biomasse leichter und gleichmäßiger erwärmt werden und vergast so besser. Im Inneren der Vergasungsschnecke vergast die Biomasse und zerfällt dabei in Asche, Kohle und Gas. Auch Biomasse mit schlechter Qualität und Biomasse mit noch Feinstoffen, wie Sägespäne kann so problemlos vergast werden.

Gemäß einer weiteren, bevorzugten Ausführungsform ist die Transportvorrichtung für Biomasse bevorzugt also die zwei Querförderschnecken wenigstens teilweise von einer direkten Wärmezuführung durch eine Trennwand abgeschottet, sodass die Wärme zumindest teilweise indirekt über die Abschottung erfolgt, welche bevorzugt aus Schamottesteinen gebildet ist.

Gemäß einer Ausführungsform sind durch Schamottesteine Kammern gebildet, in denen die Transportvorrichtung eingebracht ist. Bei der Ausführungsform mit zwei Querförderschnecken sind bevorzugt zwei separate Kammern vorgesehen, in welchen jeweils eine der Querförderschnecken angeordnet ist, wobei in den Kammern unterschiedliche Temperaturen herrschen. Die Schamottesteine nehmen die Wärme von der Wärmezufuhrvorrichtung (unter den Kammern gelegen) auf und geben diese gleichmäßig auf die zwei Querförderschnecken ab.

Durch diese indirekte Wärmeübertragung wird sichergestellt, dass die Wärmeübertragung auf die Außenwand der Querschnecken gleichmäßig erfolgt und sich kurzfristige Änderungen bei der Wärmezuführung dank der Speichermasse "Schamotte" nicht schädlich auswirken. Es hat sich gezeigt, dass diese Gleichmäßigkeit der Wärmeübertragung ein im Stand der Technik unterschätzte Auswirkung auf den Vergasungsprozess hat. Auf diese Weise wird der Vorwärmprozess und der Vergasungsprozess auch vergleichmäßigt. Dadurch ist zudem sichergestellt, dass die Außenwand der zwei Querförderschnecken sich nicht durch lokale Überhitzung oder Abkühlung verspannen kann und sich die zwei Querförderschnecken verziehen (verbiegen) und dadurch unbrauchbar werden.

Zusätzlich werden die zwei Querförderschnecken auf dem stabilen Boden der Schamottekammer lose aufgelegt. Das gesamte Gewicht der zwei Querförderschnecken lastet so auf der Schamotte und entlastet die Querförderschnecken. Damit wird dem "Durchhängen" vorgebeugt. Die zwei Querförderschnecken verbiegen sich nicht und können sich ungehindert ausdehnen. Sie werden so nicht unbrauchbar.

Die Wärmeübertragung innerhalb der Querschnecken wird auch dadurch verbessert, dass die Biomasse in den zwei Querförderschnecken ständig umgewälzt wird.

Gemäß einer Ausführung ist die Transportvorrichtung von Biomasse mit der Wärmezufuhrvorrichtung derart verbunden und dazu ausgelegt, dass die nach der Vergasung verbleibende Biomasse in die Brennkammer der Wärmezufuhrvorrichtung befördert wird, welche ihrerseits dazu ausgelegt ist, nach einer Anlaufphase (vorheizen) und bei einem Betrieb mit beispielsweise Holzhackschnitzeln die zur Erwärmung und Vergasung von der Biomasse notwendige Energie nahezu vollständig oder vollständig (je nach Brennwert) über die Versorgung mit der nach der Vergasung verbleibenden unvergaste Reste(Holzkohle)der Hackschnitzel zu beziehen. Es hat sich gezeigt, dass diese besonders wünschenswerte Eigenschaft nur ermöglicht wird, wenn eine Vergasung und/oder eine Vorwärmung nicht punktuell oder in einem kleinem Bereich erfolgt, sondern über eine Förderstrecke der Transportvorrichtung von wenigsten 2 Metern, weiter bevorzugt der gesamten Oberfläche der Transportvorrichtung.

Der Heizvorgang ist jedoch vom Vorgang der Vergasung getrennt. Deshalb sind in einem anderen Beispiel andere Energiequellen wie Gas, Öl oder Strom vorgesehen. Es muss nur genügend Wärme zur Vergasung bereitgestellt werden.

Bevorzugt wird am Anfang der Transportvorrichtung die Biomasse vorgewärmt. Im hinteren Teil bei ca. 800°C erfolgt der Vergasungsvorgang. Weil bei der Vergasung in einem Beispiel keine zusätzliche Verbrennungsluft zugeführt wird, ist der Anteil an brennbaren Gasen sehr hoch. Stickstoff ist nahezu nicht enthalten. Der Anteil von unbrennbarem CO2 ist gering.

Der CO2-Anteil kann weiter reduziert werden, wenn das Gas, wie in einer Ausführungsform vorgeschlagen, durch die glühenden nicht-vergasten Reststoffe (Hauptbestandteil Holzkohle) geführt wird. Ein Teil des unbrennbaren CO2 wird dabei zu brennbarem CO reduziert. Zusätzlich wird dabei ein Teil der für einen Gasmotor schädlichen Bestandteile wie Schwefel und Teer zerstört. Dadurch wird die bereits gute Qualität des so entstandenen Holzgases noch verbessert.

Zur Verbesserung der Sicherheit wird in einem Beispiel am Eintrag (Anfang) und Austrag (Ende) der Schnecken eine Schleuse installiert, z.B. eine Zellenrad- oder Behälterschleuse. Auf diese Weise kann bei einer Havarie verhindert werden, dass ggf. giftiges und brennbares Gas austritt.

Die entstehenden Holzgase werden im Betriebszustand abgesaugt. Dabei entsteht im Reaktor ein Unterdruck.

Alternativ kann die Vergasung aber auch in offenen Transportvorrichtungen erfolgen.

Gemäß einer Ausführungsform kann am Ende der Transportvorrichtung ein Reduktionsbehälter für die nicht-erwünschten Gasbestandteile wie Kohlendioxid (CO₂), Teer und Schwefel vorgesehen sein, welcher dazu ausgebildet ist, die glühende Holzkohle aufzufangen und eine Schüttung bereit zu stellen, die eine Veredelung des Gases durch das Durchführen der Rohgase durch die glühenden Holzkohlen verbessert. An diesen Reduktionsbehälter sind gemäß bestimmten Ausführungsformen Einlässe vorgesehen, die ein Einbringen von Zusatzstoffen, wie Wasser, oder Kalk ermöglichen. Durch das Einbringen dieser Stoffe werden die Gasqualität und der Brennwert des Rohgases weiter gesteigert.

Gemäß einer Ausführungsform erfolgt die Gasabführung am Ende der Transportvorrichtung. Im Falle einer Schnecke bevorzugt am Ende der Förderstrecke der Schnecke am Austragsstutzen der Schnecke.

Gemäß einer weiteren Ausführungsform besitzt die Anlage eine Vorrichtung zur Zugabe von Wasser. Hierdurch erhöht sich der Wasserstoff- und Methangehalt im Rohgas.

Vorzugsweise ist ebenfalls oder fakultativ eine Vorrichtung zur Zugabe von Kalk vorgesehen. Hierdurch wird der Schwefelgehalt im Rohgas und in der Asche reduziert.

Die heißen brennbaren Gase, die in der vorliegenden Erfindung auch als Holzgas bezeichnet werden, werden in einem Beispiel mit ca. 500 bis 600°C aus der Schnecke abgesaugt und durch einen auf dem Prinzip eines Wärmetauschers beruhenden Kühler mit Polizeinachfilter mit oder ohne Aktivkoksfüllung geführt. Die Kühlung und Reinigung erfolgt z.B. um ggf. noch vorhandene schädliche Stoffe wie Teer, Schwefel und Staub abzuscheiden. Dies stellt eine weitere Verbesserung der Qualität des Rohgases dar und führt zu einer Verlängerung der Lebensdauer eines mit dem dann gereinigten Gas betriebenen Motors.

Gemäß einer weiteren bevorzugten Ausführungsform wird die erste Stufe des zweistufigen Kühlers mit Polizeifilter durch einen Gaswäscher ersetzt. Der Gaswäscher hat die Aufgabe, das Rohgas mittels eingespritztem Kühlwasser abzukühlen. Das Rohgas kommt dabei mit dem Kühlmedium in Kontakt. Dabei wird das Rohgas von unten im Gaswäscher mittels Düsenboden oder Siebboden direkt durch das aufgestaute Kühlwasser geleitet. Das Rohgas wird dabei in einzelne Gasblasen aufgelöst, die durch das stehende Kühlwasser und mittels Sprühdüsen befeuchteter hohler Füllkörper nach oben steigen. Dabei hat das Rohgas intensiven Kontakt mit dem Kühlwasser und ggf. dem Kühlwasser zugeführten Additiven. Dem Kühlwasser können verschiedene Additive wie Kalkmilch und Säure oder Basen bindende Substanzen beigemischt werden. Diese können dann ggf. im Rohgas enthaltene Schadstoffe binden und werden zusammen mit dem Kühlwasser ausgetragen. Die zweite Stufe des Kühlers hat (wie im ersten Ausführungsbeispiel) die Aufgabe, das dem Rohgas im Gaswäscher zugeführte Wasser wieder abzuscheiden und das Rohgas noch weiter herunter zu kühlen. Zusätzlich wird das Rohgas durch einen Polizeifilter geleitet und gefiltert. Das so behandelte Rohgas kann einem Gasmotor zugeführt werden.

Das gereinigte Gas kann von einem handelsüblichen Stromerzeuger, z.B. Gasmotor mit Generator, als Kraftstoff verwendet werden. Der entstehende Strom, in einem Beispiel ca. 100 kW/h, kann verkauft oder selbst genutzt werden.

Beim Betrieb der Anlage wird zusätzlich zum Strom Wärme erzeugt. Diese Wärme von ca. 250 kW/h, die hier als Nebenprodukt anfällt, kann verkauft oder selbst genutzt werden.

In einem Beispiel ist vorgesehen, dass die Transportvorrichtung von der Flamme eines Brennraums direkt beheizt werden oder von Rauchgasen verbrannter Biomasse (z.B. Holz) im Gegen-, Gleich- oder Kreuzstrom umspült werden und dabei beheizt werden. Das Reaktionsprodukt Holzkohle aus den Reaktoren wird direkt (z.B. ungekühlt oder auch nach Abkühlung) als Brennstoff in den Brennraum überführt. Das reduziert die Heizkosten.

In einem Beispiel ist vorgesehen, dass das Reaktionsprodukt Rohgas aus der Transportvorrichtung bzw. aus dem Reduktionsbehälter abgesaugt wird, auf Temperaturen unter oder nahe dem Gefrierpunkt gekühlt wird und gefiltert wird. Durch die starke Kühlung werden für den zu betreibenden Gasmotor schädliche Bestandteile wie Teer und Staub aus dem Gas entfernt. Erst dann wird das Gas dem Gasmotor zugeführt.

Gemäß der Erfindung ist auch ein Verfahren zur Erzeugung von Gas in einer Biomassevergasungsanlage, sowie ein Verbundsystem zur Erzeugung von Strom vorgesehen, in dem eine voranstehend beschriebene Biomassevergasungsanlage angeordnet ist und welches zusätzlich über einen gasbetriebenen Motor und einen Generator zur Erzeugung von Strom verfügt.

Der Gasmotor erreicht durch die Kühlung eine höhere Leistung.
Fig. 1 zeigt eine Funktionsskizze einer herkömmlichen Biomassevergasungsanlage.
Fig. 2 zeigt eine schematische Darstellung einer ersten Ausführungsform der erfindungsgemäßen Biomassevergasungsanlage.
Figur 3 zeigt eine schematische Darstellung einer zweiten Ausführungsform der Biomassevergasungsanlage.
Figuren 4a bis 4d zeigen Details der Biomassenzuführung und Ascheabführung der Anlage,
Figur 5 zeigt eine Biomassevergasungsanlage im Querschnitt mit den die Transportvorrichtung umschließenden Kammern aus Schamottesteinen für gleichmäßige Wärmezuführung und für die Abstützung der Transportvorrichtung,
Figur 6 zeigt Details der Holzgasaufbereitung und eine mögliche Aufstellung der Biomassevergasungsanlage in einem Verbundsystem zur Stromerzeugung.

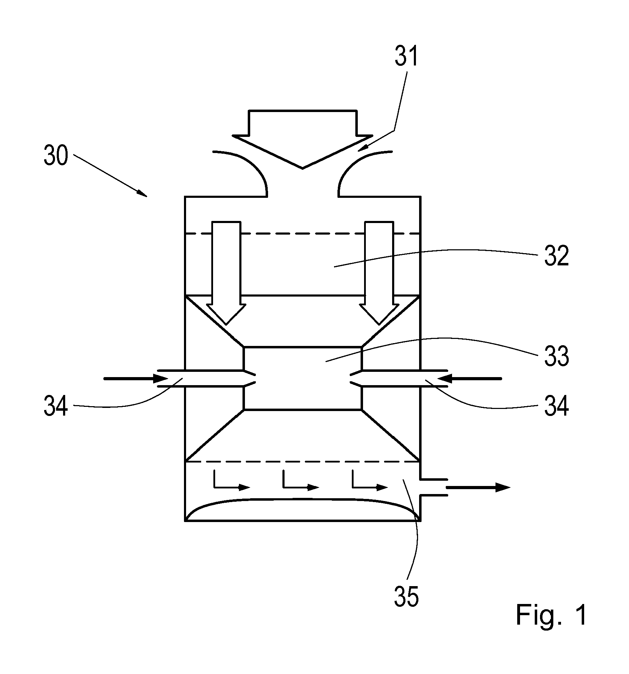

Figur 1 zeigt eine herkömmliche Holzvergasungsanlage 30 gemäß dem Stand der Technik. In eine solche Anlage werden meist Holzhackschnitzel von oben in einen Schacht 31 eingebracht und durch Zufuhr von Wärmeenergie vergast. Es entsteht eine Schüttung im Bereich 32, die langsam senkrecht nach unten rutscht, weil das Holz vergast und dabei in Asche, Kohle und Gas zerfällt. Oben wird das Holz vorgewärmt. In der Mitte der Schüttung ist der Brennraum 33. Hier wird Umgebungsluft 34 zugeführt. Dabei verbrennt ein Teil des Holzes bei ca. 1000°C. Es entsteht ein Gemisch aus Holzgas und Rauchgasen mit viel Stickstoff und Kohlendioxid. Das Gas wird bei 35 abgesaugt.

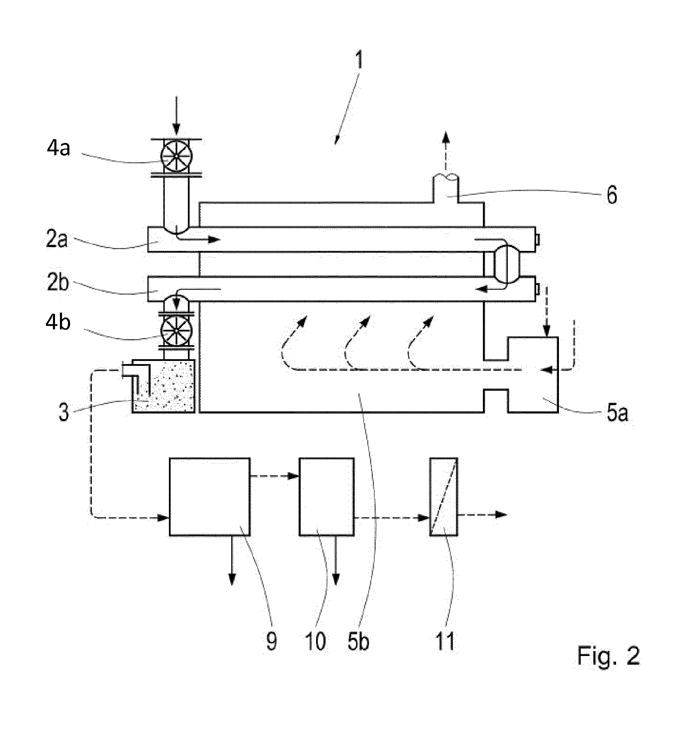

Figur 2 zeigt eine schematische Darstellung einer ersten Ausführungsform der Biomassevergasungsanlage. Über ein Zellenrad 4a, welches als Schleuse dient, gelangt Biomasse in den als Schnecke 2a ausgelegten oberen Querförderer.

In diesen Schnecken 2a und 2b wird das Biomaterial Luftdicht getrennt von einem Feuerraum 5b durch diesen Feuerraum 5b transportiert. Auf dieser Strecke wird die Biomasse durch die Rauchgase und/oder direkt durch Flammen, welche in dem Brennraum 5a entstehen vorgewärmt. Dabei dient das Außenrohr der Schnecke als Wärmeübertrager und ist dementsprechend ausgelegt. Die Vorwärmschnecke 2a weist eine Temperatur von 100 bis 500 Grad Celsius an seiner Oberfläche (außen) auf. Am Ende dieser Vorwärmschnecke 2a ist ein Fallrohr angeordnet, über das die vorgewärmte Biomasse in eine darunter liegende Vergasungsschnecke 2b fällt. In der Vergasungsschnecke 2b wird die Biomasse weiter luftdicht von dem Feuerraum 5b durch diesen geführt. Während die Flamme im Feuerraum eine Temperatur von 900 bis 1100 bevorzugt 1000 Grad Celsius hat, hat die Vergasungsschnecke auf ihrer Oberfläche (außen) eine Temperatur zwischen 700 und 900, bevorzugt 800 Grad Celsius. Nicht nur auf einem kurzen Abschnitt der Schnecke, sondern auf einer Förderstrecke von bevorzugt mehr als 2 und noch mehr bevorzugt von mehr als 3 Metern bzw. der gesamten Länge der Schnecke 2b erfolgt die Vergasung in der Schnecke 2b. Am Ende der Vergasungsschnecke 2b befindet sich ein weiteres Zellenrad 4b, welches die Vergasungsschnecke 2b als Schleuse von einer nachgeordneten Reduktionskammer 3 trennt. In diese Reduktionskammer 3 fallen die nicht-vergasten Reste der Biomasse, insbesondere glühende Holzkohle. In der Reduktionskammer 3 entsteht so eine Schüttung aus glühender Holzkohle, durch die das Holzgas aus der Vergasung gesaugt wird. Während der Vergasung ggf. entstandenes Kohlendioxid wird hier reduziert, wodurch die Qualität des Gases erheblich gesteigert wird. Das dementsprechend aufgewertete Gas strömt nach der Reduktionskammer 3 in eine erste Stufe 9 der Kühlanlage und danach in eine zweite Stufe 10 der Kühlanlage und dann durch einen Polizeifilter 11. Danach ist das Gas verwertungsfähig.

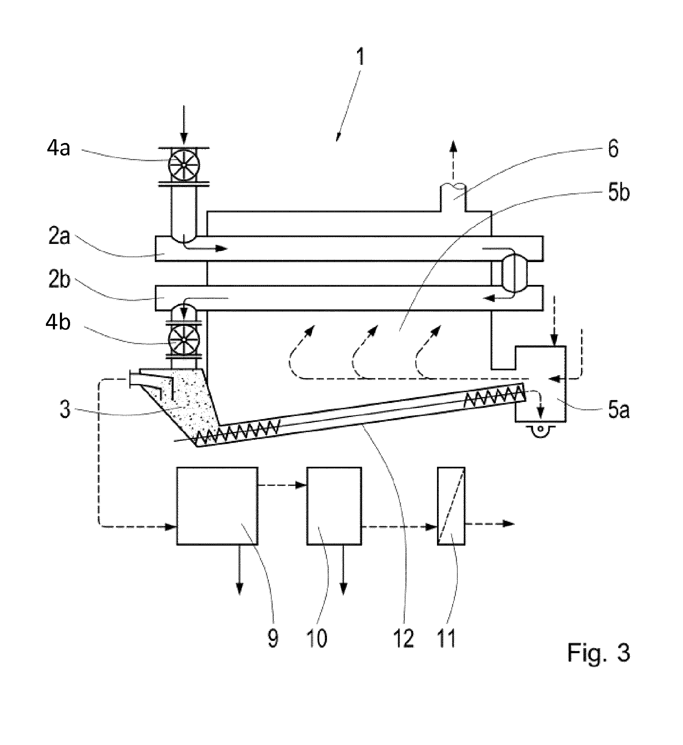

Die Ausführungsform der in Figur 2 dargestellten Biomassevergasungsanlage 1 unterscheidet sich von der in Figur 3 dargestellten Anlage nur in dem Prinzip der Befeuerung: Während in der Anlage nach Figur 2 Brennstoff lediglich von außen in den Brennraum 5a gegeben wird und unter Hinzugabe von Luft verbrannt wird, ist die Brennkammer 5a gemäß Figur 3 zusätzlich über eine Kohleschnecke 12 mit dem Reduktionsraum 3 verbunden. Hierdurch kommt es zu einer großen Einsparung von Brennstoff, weil die Brennkammer 5a nach dem Anfahren der Anlage nahezu oder komplett vollständig mit der nicht-vergasten Resten aus der Vergasungsschnecke 2b befeuert werden kann.

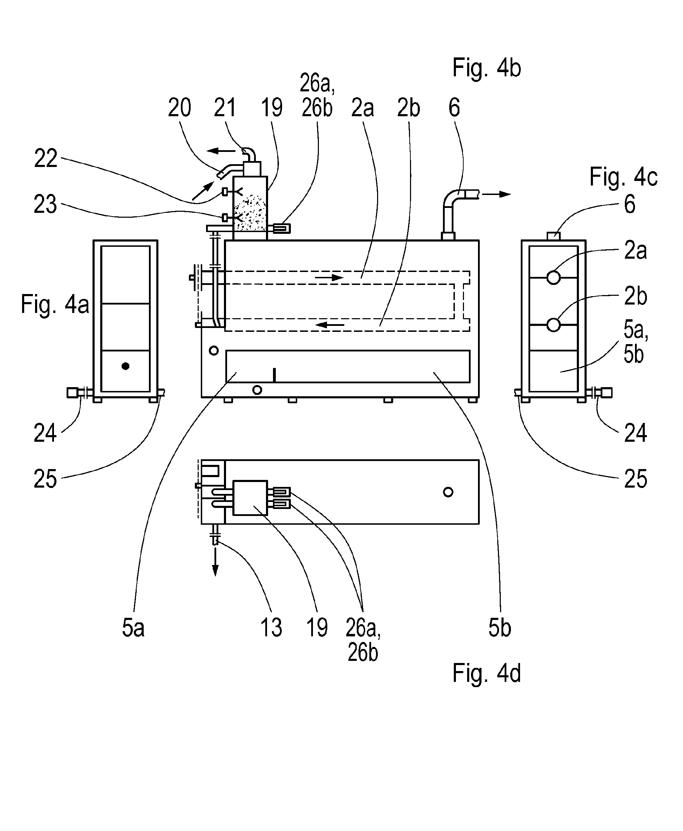

In den Figuren 4a bis 4d sind weitere Details einer besonderen Ausführungsform der Biomassevergasungsanlage 1 in verschiedenen Querschnittsdarstellungen gezeigt. Vor der Vorwärmschnecke 2a sind zwei Dosiervorrichtungen 26a und 26b angeordnet, von denen eine die im Behälter 19 befindliche Biomasse der Vorwärmschnecke 2a zuführt und die andere den Brennraum 5a mit Biomasse versorgt. Der Behälter 19 wurde seinerseits mit einer pneumatischen Förderung oder mechanisch über den Einlass 20 befüllt. Die Luft dieser Befüllung entweicht bei Auslass 21. In dem Behälter 19 sind zwei Sensoren 22 und 23 angeordnet, welche die Befüllung des Behälters 19 mit Biomasse überwachen. Am Boden des Brennraums 5a ist eine Auswurfvorrichtung für Asche 25 vorgesehen, für die ebenfalls eine Schnecke 24 vorgesehen ist. Das Rohgas wird bei 13 abgesaugt und hat eine Temperatur von ca. 500 Grad Celsius.

Der Brennraum 5a hat eine Länge von etwa 4 Metern, eine Breite und Höhe von etwa einem Meter. Die Vorwärmschnecke 2a und die Vergasungsschnecke 2b haben jeweils eine Länge von 4 Metern und einen Außen-Durchmesser von 30 cm. Die Gesamthöhe der Anlage inklusive Behälter 19 für Biomasse ist ca. 5 Meter.

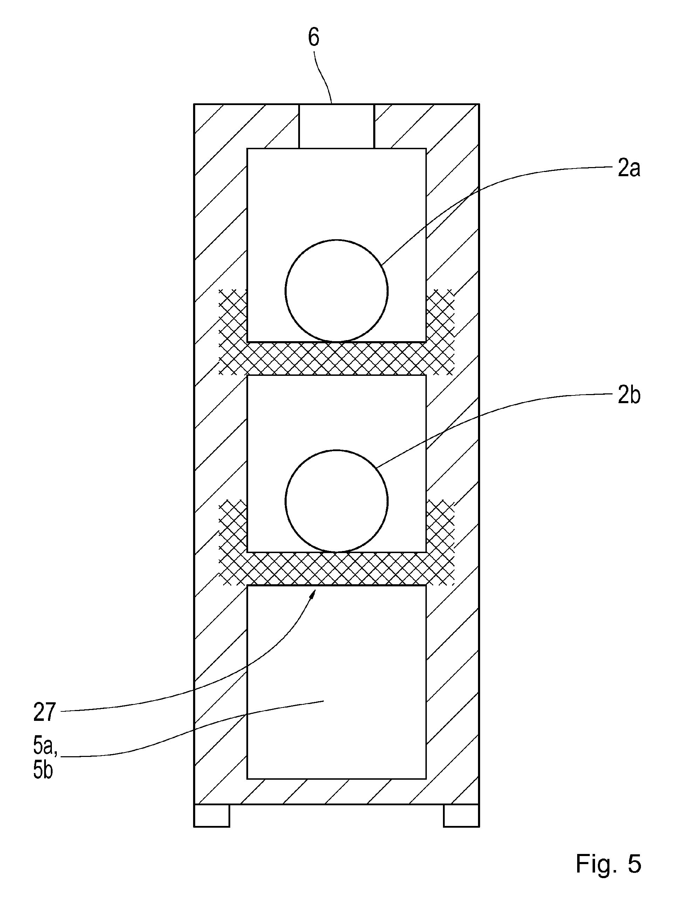

In der Figur 5 der Anlage ist eine Ausführungsform der Biomassevergasungsanlage dargestellt, bei der die Wärmeübertragungsvorrichtung 5a, 5b die Wärme teilweise indirekt an die Vergasungsschnecke 2b und die Vorwärmschnecke 2a abgibt. Durch Schamottesteine 27 werden Kammern gebildet, in denen die Vergasungsschnecke 2b und die Vorwärmschnecke 2a aufliegen. Hierdurch wird erreicht, dass die Schamottesteine als Wärmespeicher dienen und die Wärme gleichmäßiger an die beiden Schnecken abgeben. Hierdurch wird nicht nur der Wirkungsgrad der Anlage erhöht, sondern es wird auch ein Durchhängen und Verbiegen der Schnecke verhindert.

In dieser bevorzugten Ausführungsform ist die Biomassevergasungsanlage so ausgelegt, dass die Schamottesteine, welche die Vergasungsschnecke 2b schützen, ca. 1000 Grad Celsius warm werden und die Schamottesteine, welche die Vorwärmschnecke schützen, ca. 600 Grad Celsius warm werden.

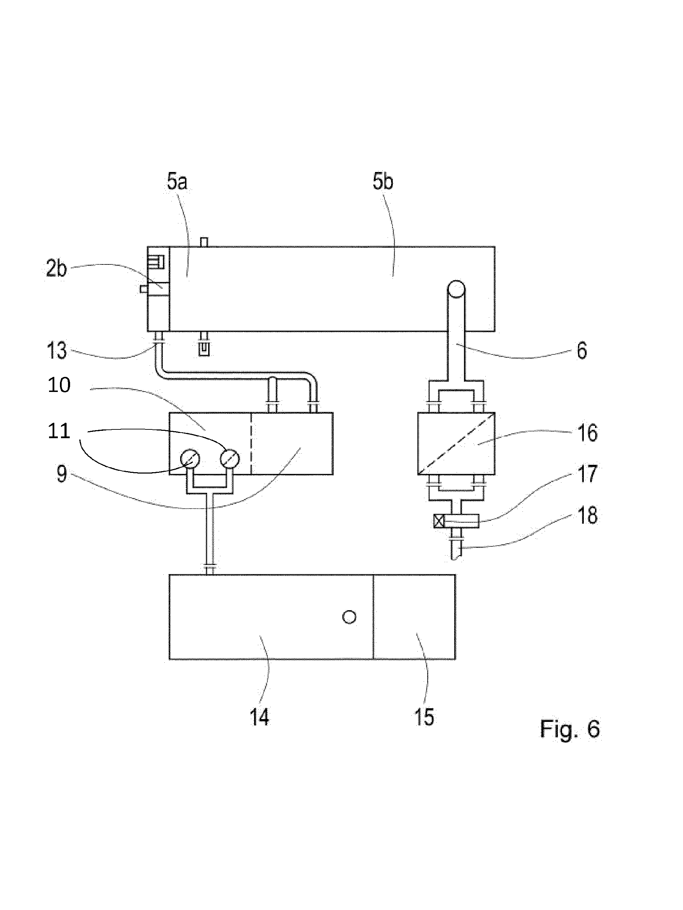

In der Figur 6 sind weitere Details einer Ausführungsform der Biomassevergasungsanlage dargestellt. Die in der Brennkammer 5a entstandenen Rauchgase werden über Feuerraum 5b an den Transportvorrichtungen (2 Schnecken) vorbei mittels Rohrleitung 6 in einen Kühler geleitet. Der Kühler hat zusätzlich einen Staubabscheider. Dabei wird die Temperatur des Rauchgases von 500 Grad Celsius auf ca. 100 Grad Celsius gesenkt. Über einen Ventilator 17 gelangen dann die Rauchgase zu einem Schornstein 18 für das Rauchgas. Das über das Rohr 13 aus der Vergasungsschnecke 2b abgesaugte Holzgas gelangt über zwei hintereinander geschaltete zweistufige Kühler 9, 10, bei denen das Holzgas von etwa 500 Grad Celsius auf zwischen 0 und 20 Grad Celsius und bevorzugt auf 5 Grad Celsius gekühlt und mit einem Staubabscheider 11 gefiltert wird zu einem Gasmotor 14 und einem angeschlossenem Generator 15 mit 100 KW.

Zum Anfahren der Anlage gemäß der Figuren 2 bis 5 wird zunächst die Dosiervorrichtung 26a in Betrieb gesetzt, über die Biomasse mit Hilfe einer Förderschnecke in den Brennraum 5a gelangt und dort verbrannt wird. Die Verbrennungswärme wird über die Rauchgase und die Schamotte-Wärmespeicher an die Transportvorrichtung übertragen und damit aufgeheizt. Wenn die Außenwand der Transportvorrichtung eine Temperatur von 750 Grad Celsius erreicht hat beginnt der Vergasungsvorgang.

Dazu wird die Dosiervorrichtung 26b, welche mit einer Förderschnecke zur Befüllung der Vorwärmschnecke 2a verbunden ist, geöffnet.

Es hat sich gezeigt, dass es besonders sinnvoll ist, die Anlage so auszulegen, dass das beim Anfahren entstehende Holzgas im Anfahrprozess in den Brennraum 5a zu leiten, indem die Ventile zu den Kühlern 9 und 10 und über den Polizeifilter auch zu einer hier nicht dargestellten Fackel vorrübergehend geschlossen werden. Dann gelangt das entstehende Holzgas über die Kohleschnecke 12, welche sich am Ende der Vergasungsschnecke 2b befindet, in den Brennraum 5a. Daraufhin werden die beiden Kühler 9 und 10 eingeschaltet, wobei 9 ein Normal-Wasserkühler und 10 ein Eiswasserkühler ist. Die Temperatur im Brennraum unterhalb der Vergasungsschnecke 2b wird permanent überwacht. Der Anfahrprozess ist abgeschlossen, wenn die Temperatur über 799 Grad Celsius an der Oberfläche (Außenseite) der Transportvorrichtung steigt. Wenn hier mindestens 800 Grad Celsius herrschen und die Vorwärm- und Vergasungsschnecken wenigstens 60 Sekunden laufen, wird hochwertiges, für Gasmotoren verwertbares Gas produziert.

Beim Abfahren der Anlage wird die Vergasung gestoppt, wenn die Temperatur unter der Vergasungsschnecke unter 750 Grad Celsius fällt. Das dann noch produzierte Gas wird dann nicht wie beim Anfahren in den Brennraum 5a, sondern zu der hier nicht dargestellten Fackel geleitet.

## Patentansprüche

1. Biomassevergasungsanlage (1) mit:
- einer Transportvorrichtung (2a, 2b) von Biomasse,
- einer Wärmezufuhrvorrichtung (5a, 5b) zur Erwärmung der im Innenbereich der Transportvorrichtung (2a, 2b) angeordneten Biomasse, wobei
- die Transportvorrichtung (2a, 2b) von Biomasse luftdicht von der Wärmezufuhrvorrichtung (5a, 5b) getrennt im Inneren der Wärmezufuhrvorrichtung (5a, 5b) angeordnet ist und selbst als Wärmeübertrager ausgebildet ist, und wobei
- die im Inneren der Wärmezufuhrvorrichtung (5a, 5b) angeordnete Transportvorrichtung (2a, 2b) eine vergasungsleistungsspezifische Wärmeübertrager-Oberfläche von wenigstens 0,04 m²/(Nm³ pro h) besitzt.

2. Biomassevergasungsanlage (1) nach Anspruch 1 wobei die Transportvorrichtung (2a, 2b)zumindest teilweise von einer direkten Wärmezuführung durch eine Trennwand (27) abgeschottet ist und wodurch eine Wärmezuführung zu der Transportvorrichtung (2a, 2b) zumindest teilweise indirekt über die Trennwand (27)erfolgt.

3. Biomassevergasungsanlage (1) nach Anspruch 1 oder 2 mit einer Öffnung (13) zum Abführen des entstehenden Gases, wobei das Gas durch die glühenden unvergasten Reststoffe führbar ist, um einen Teil des unbrennbaren CO2 und Teer zu brennbarem CO zu reduzieren.

4. Biomassevergasungsanlage (1) nach einem der vorhergehenden Ansprüche mit einer Absaugvorrichtung zur Absaugung des entstehenden Rohgases, wobei ein Unterdruck in der Transportvorrichtung von Biomasse (2) entsteht.

5. Biomassevergasungsanlage (1) nach einem der vorhergehenden Ansprüche, wobei vorgesehen ist, dass
- die Vergasung in einer offenen Transportvorrichtung (2a, 2b) erfolgt; und/oder
- die Vergasung in temperaturbeständigen Transportvorrichtungen (2a, 2b) erfolgt, die liegend oder stehend aufgestellt sind.

6. Biomassevergasungsanlage (1) nach einem der vorhergehenden Ansprüche, wobei die Transportvorrichtung (2a, 2b) von außen beheizt wird; wobei durch diese Transportvorrichtung gleichzeitig bevorzugt kontinuierlich (auch chargenweiser Transport möglich) die Biomasse transportiert wird und dabei vergast wird; und wobei die Wärmeübertragung durch die Wand der Transportvorrichtung erfolgt.

7. Biomassevergasungsanlage (1) nach Anspruch 6, **dadurch gekennzeichnet, dass** als Transportvorrichtung zwei Querförderer (2a, 2b) vorgesehen sind, wobei der erste Querförderer (2a) dazu ausgelegt ist, eine Vorwärmung der Biomasse durchzuführen und der zweite Querförderer (2b) dazu ausgelegt ist, eine Vergasung der Biomasse durchzuführen.

8. Biomassevergasungsanlage (1) nach einem der vorangehenden Ansprüche, **dadurch gekennzeichnet, dass** die Transportvorrichtung (2a, 2b) von Biomasse mit dem Wärmeerzeuger (5a, 5b) derart verbunden und dazu ausgelegt ist, die nach der Vergasung verbleibende Biomasse in die Brennkammer (5a) zu befördern, welcher seinerseits dazu ausgelegt ist, nach einer Anfahrphase und bei einem Betrieb mit bevorzugt Holzhackschnitzeln die zur Erwärmung und Vergasung von der Biomasse notwendige Energie vollständig über die nach der Vergasung verbleibende nichtvergaste Biomasse zu beziehen.

9. Biomassevergasungsanlage (1) nach einem der vorangehenden Ansprüche, wobei Biomasse mit dem Querförderer (2a, 2b) kontinuierlich oder auch chargenweise einbringbar ist;
wobei vor der Vorwärmschnecke (2a) eine Dosiereinrichtung (26a, 26b) installiert ist;
wobei eine lose Schüttung erzeugbar ist, die nur einen Teil des Innenraumes der Schnecken (2a,2b) ausfüllt, wodurch die Biomasse durch die im Inneren der Schnecke angeordnete sich drehende Schneckenwelle gut durchmischt, gleichmäßig vergast und in Asche, Kohle und Gas zerfällt;
wobei sich ein Wärmeerzeuger (5a, 5b) luftdicht getrennt vom Vorgang der Vergasung befindet, der mit Holz befeuerbar ist; wobei die Rauchgase getrennt über einen normalen Schornstein (18) in die Umgebung abgeleitet werden, wobei die Verbrennungswärme auf die Schnecken (2a, 2b) übertragbar ist, um die Vergasung im Innern der Schnecke (2b) auszulösen;
wobei der Heizvorgang vom Vorgang der Vergasung getrennt ist;
wobei am Anfang der Schnecke (2a) die Biomasse vorwärmbar ist und im hinteren Teil (2b) bei ca. 750°C bis 800°C die Vergasung stattfindet;
wobei die Vergasung ohne zusätzliche Verbrennungsluft durchführbar ist zur Erhöhung der Anteile an brennbaren Gasen;
wobei das Gas durch die glühenden nicht-vergasten Reststoffe führbar ist, um einen Teil des unbrennbaren CO2 zu brennbarem CO und Teer zu reduzieren;
wobei ein Teil der für einen Gasmotor (14) schädlichen Bestandteile wie schwefelhaltige Gase und Teer entfernbar ist; und
wobei am Eintrag (Anfang) und Austrag (Ende) der Schnecken (2a, 2b) eine Schleuse (4a, 4b) installiert ist, z.B. eine Zellenrad- oder Behälterschleuse, um ein Austreten von ggf. giftigem und brennbarem Gas bei einer Havarie zu verhindern.

10. Biomassevergasungsanlage (1) nach einem der vorhergehenden Ansprüche, wobei die Transportvorrichtung (2a, 2b) von der Flamme eines Brennraums (5a) direkt oder indirekt beheizt wird oder von Rauchgasen verbrannter Biomasse (z.B. Holz) im Gegen-, Gleich- oder Kreuzstrom umspült wird und dabei beheizt wird; und wobei das Reaktionsprodukt Holzkohle aus der Transportvorrichtung (2b) direkt (z.B. ungekühlt oder auch nach Abkühlung) als Brennstoff in den Brennraum (5a) überführt wird.

11. Biomassevergasungsanlage (1) nach einem der vorhergehenden Ansprüche, wobei das Reaktionsprodukt Holzkohle ungekühlt aus der Transportvorrichtung (2b) in einen in der Transportvorrichtung integrierten, oder außerhalb aufgestellten Reduktionsbehälter (3) transportiert wird; und wobei ein Teil des im Gas befindlichen unbrennbaren CO2 dabei zu brennbarem CO reduziert wird; und wobei durch Zugabe von weiteren Stoffen in den Reduktionsbehälter (3) wie Wasser die Gasmenge und der Gasbrennwert weiter erhöht werden können.

12. Biomassevergasungsanlage (1)nach einem der vorhergehenden Ansprüche, wobei das Reaktionsprodukt Gas aus der Transportvorrichtung (2b) bzw. Reduktionsbehälter (3) abgesaugt wird, auf Temperaturen unter oder nahe dem Gefrierpunkt gekühlt wird und gefiltert wird; und wobei durch die starke Kühlung und zusätzliche Filterung für einen zu betreibenden Gasmotor (14) schädliche Bestandteile wie Teer und Staub aus dem Gas entfernt werden; und wobei das gereinigte Gas dem Gasmotor erst dann zugeführt wird.

13. Biomassevergasungsanlage (1) nach einem der vorangehenden Ansprüche in einem Verbundsystem zu Erzeugung von Strom, wobei die Wärmezufuhrvorrichtung (5a, 5b) außer in der Anfahrphase ausreichend über die Kohleschnecke (12) mit nicht vergaster Biomasse aus der Transportvorrichtung (2a, 2b) versorgt werden kann, um ausreichend Gas zur Stromproduktion zu erzeugen.

14. Verfahren zur Erzeugung von Gas in einer Anlage nach einem der vorhergehenden Ansprüche.
